# EUROPEAN PATENT APPLICATION

(11) **EP 1 536 189 A2**
(43) Date of publication of application: **01.06.2005**
(21) Application number: 04380063.0
(22) Date of filing: 24.03.2004
(51) Int. Cl.: F24J 2/46, F24J 2/02

(54) **Low temperature thermal solar collector**

(30) Priority: 28.11.2003 ES 200302812
(71) Applicant: Perez Ramos, José Carlos, 38001 Santa Cruz de Tenerife (ES)
(72) Inventor: Perez Ramos, José Carlos, 38001 Santa Cruz de Tenerife (ES)
(74) Representative: Carpintero Lopez, Francisco

(57) **Abstract**

The bar (1) which forms the frame of the collector has a lower recess (8) and an upper recess (9), intended to house some extensions (10) of a protective bar (11) which is coupled collaterally to the bar (1), and which hides on its interior accessory elements of the collector, and also it is possible to couple a covering bar (13) which is introduced in the upper recess (9) of bars (1) belonging to different collectors to cover the space separating collectors. Also the bar (1) incorporates a screw (16) in its base between the head (20) of which and a nut (18) a space is defined which facilitates the guided displacement of the bar (1) in a sliding manner with respect to a guide bar (21) up to its final securing, which guide bar (21) is attached to a base bar (22) which constitutes an adjusting and positioning element of the collector with respect to the roof.

## Description

### OBJECT OF THE INVENTION

It is an object of the invention that the collector incorporates a number of modifications in the design of the frame which defines it, as well as having a number of complementary bars, the purpose being to facilitate the integration of the collector in the structure of the roof on which it is installed, to hide and protect the connection pipes, electric cables, safety fittings and other accessories, as well as to adapt and allow the union between collectors.

It is also an object of the invention to combine slight variations in the bar of the frame with the incorporation of new bars to achieve satisfactory conditions of adjustment and emplacement of the collectors on the roof.

### BACKGROUND OF THE INVENTION

In the Spanish patent of invention with application number 9700961, the characteristics are to be found of a low temperature thermal solar collector which uses a thermal circuit capable of absorbing the energy produced by solar radiation, which is distinguished by having dimensional flexibility insofar as length and width are concerned, with a reduced thickness and simple assembling technology.

The collector is structured by means of a rectangular frame which defines its outline based on four segments of a same bar which is U-shaped in configuration with a channel in the lower flange intended to receive a bottom plate consisting of an aluminium sheet, and on the upper flange of which there is a step on which a transparent cover rests which is secured with the collaboration of a beading, which consists of a bar which fits snugly in a groove defined in the bar of the frame.

Internally the collector incorporates a layer of heat lagging situated on the bottom on which a bar rests which has a semicircular central groove that houses the tube conducting the liquid which absorbs and distributes the heat gathered by the collector.

When the intention is to erect a standard installation of solar collectors on a roof or roofing, the dimensions of the collectors have to be adapted to the space limitations imposed by the roof or roofing, and also the connection accessories, be they pipes or valves and other elements have to be covered so that they remain hidden by means of other building complements. These circumstances result in it being difficult to achieve uniformity in assembly.

Moreover the erection of the collectors on the roof is done with intermediation of metallic structures to which they are screwed. This method of erection is not very flexible when adapting collectors to each other and presents the problem that dismantling is required at several screwed points of certain collectors when maintenance tasks and repair work are carried out on other collectors which form part of the same series.

To resolve this problem it is necessary to have some bars optimised in combination with the structural solutions proposed for the collector object of the patent of invention application 9700961, this being the object of the invention which is disclosed below.

### DESCRIPTION OF THE INVENTION

The present invention brings together a number of improvements in the configuration of the bar of the frame of a collector, supplemented with a number of bars which facilitate the individual and combined integration of the collectors when erected on the roof or roofing.

The bar constituting the frame has a general U-shape, on the lower flange of which is coupled a base plate and on its upper flange is coupled a transparent top cover, it being foreseen that at a level immediately below that of the upper flange and at the same level as that of the lower flange, corresponding recesses have been made, upper and lower in an L-shape, intended to house some extensions of a protective bar conceived to hide and/or protect the connection pipes and other items, which are coupled collaterally to the bar of the frame.

This protective bar has a generally rectangular configuration, interrupted on one of its sides from which the aforementioned extensions run at an angle, having on the side parallel to this side and at the same height as these extensions some inlets similar to those of the bar of the frame, intended to facilitate the coupling of another bar.

The collectors which traditionally are found separate on the roof with their connections in view, can be installed in a continuous manner and without intervening spaces being joined with some covering bars which have a general U-shape with their ends angled outward at 90° and intended for incorporation in the upper recesses defined in the bars of the frames of each collector.

Another improvement proposed by this invention relates to that it can be installed in a sliding manner for its adjustment on the roof, employing for this the intermediation of a base bar which constitutes the adjusting and positioning element, and a guide bar fastened to the base bar and with respect to which the bar of the frame, and therefore the collector, is displaced until secured in position by a screw.

The bar of the frame incorporates a hole drilled for a screw to pass, between the head of which and an external nut a space is defined which facilitates the guided displacement of the bar of the frame, and therefore of the collector, with respect to individual horizontal internal extensions of the guide bar.

Said guide bar is generally U-shaped in configuration and from its ends run the mentioned inwardly angled extensions, the flanges of the guide bar having holes drilled in them for the passage of a transversally arranged screw which attaches the guide bar to the base bar.

### DESCRIPTION OF THE DRAWINGS

To complete the description that is being made and with the object of assisting in a better understanding of the characteristics of the invention, in accordance with a preferred example of practical embodiment thereof, said description is accompanied, as an integral part thereof, with a set of drawings wherein by way of illustration and not restrictively, the following has been represented:

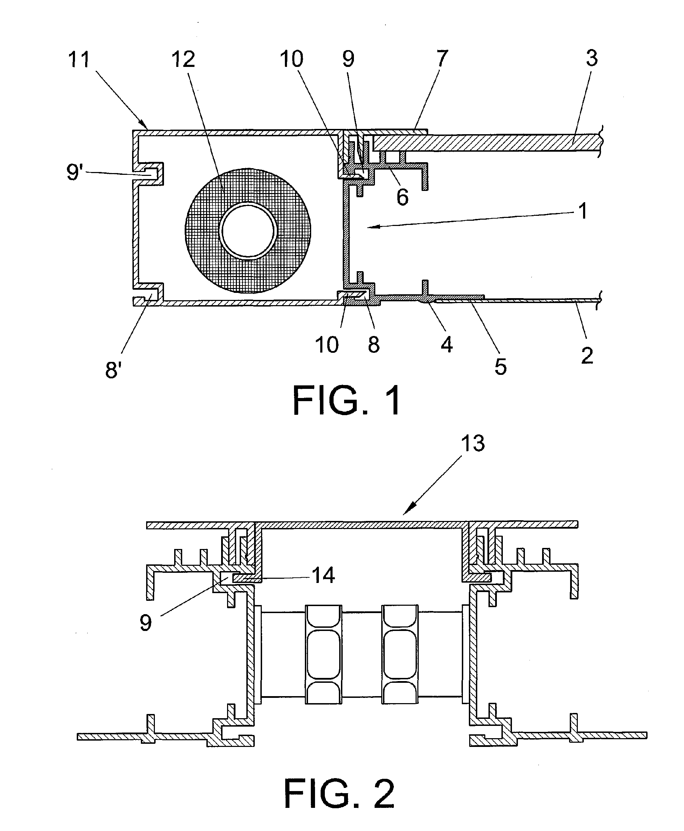

Figure 1. - It shows a front view of the bar of the frame of the collector with its base plate, transparent cover and beading plate, to which a protective bar is coupled laterally which hides piping.
Figure 2. - It shows a front view of two frame bars belonging to different collectors covered by corresponding beading plates, there being defined between the two collectors a space covered by means of the covering bar.

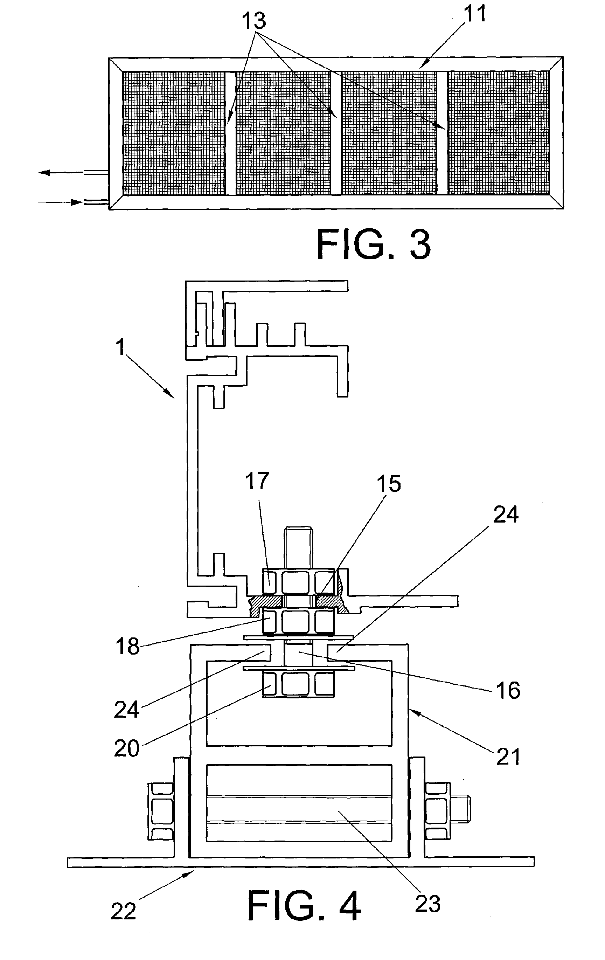

Figure 3. - It shows a plan view of an installation of collectors incorporated on a roof.
Figure 4. - It shows a front view of the method of joining the bar of the collector frame to the roof with the intermediation of a guide bar and a base bar.

### PREFERRED EMBODIMENT OF THE INVENTION

The present invention refers to a number of improvements proposed in the patent of invention with application number 9700961, in relation with a low temperature thermal solar collector which is based on the incorporation of a frame constituted by a number of bars (1) linked by means of a base plate (2) for securing and a transparent upper cover (3), said bar having a general U-shaped configuration, with its lower flange (4) having a groove (5) for coupling the aforementioned base plate (2) for securing, while its upper flange (6) has some supports for the transparent upper cover (3) and some grooves for fitting a beading (7).

Based on this basic constitution the improvements proposed in this invention consist in the first place in that in the bar (1) of the frame, at the level of the lower flange (4), has a lower recess (8), L-shaped, and also at an immediately lower level to that of the upper flange (6) an upper recess (9) is made, L-shaped, in the opposite direction to the previous one, intended to house some extensions (10) of a protective bar (11) which is coupled collaterally to the bar (1) and which hides on its interior accessory elements of the collector, such as connection pipes (12), and also on the upper recess (9) a covering bar (13) can be coupled which has a general U-shape with its ends (14) angled outward at 90° which are introduced in the upper recess (9) of bars (1) belonging to different collectors in order to cover the space separating collectors, obtaining an assembly which is compact and integrated in its installation.

The protective bar (11) has a rectangular general shape, one of the sides of which is open after the outward angle of the aforementioned extensions (10), there being on the side parallel to this and at the same height as said extensions (10) an upper recess (9') and a lower recess (8') intended to facilitate the coupling of another bar.

Another characteristic of the invention consists in that the bar (1) of the frame incorporates in its base a drill hole (15) made for a screw (16) to pass which is secured by means of an internal nut (17) and a nut (18) external to said base, the external nut (18) being separate with respect to the head of the screw (20) defining a space which facilitates the guided displacement of the bar (1) in a sliding manner, and therefore of the collector, with respect to some horizontal internal extensions (24) of a guide bar (21) up to its final securing, which guide bar (21) is fastened to a base bar (22) which constitutes an adjusting and positioning element of the collector with respect to the roof.

The guide bar (21) has a general U-shaped configuration from the ends of which run the aforesaid inwardly angled extensions (24), there being drilled holes in the flanges of the guide bar (21) for the passage of a screw (23) arranged transversally which attaches the guide bar (21) to the base bar (22).

## Claims

1. Low temperature thermal solar collector which incorporates a frame which is constituted by a number of bars (1) which have a general U-shaped configuration, with their lower flange (4) having a groove (5) for coupling a base plate (2) for securing, whilst the upper flange (6) thereof has some supports for housing a transparent top cover (3) and some grooves for fitting a beading (7), **characterised in that** the bar (1) of the frame has, at the level of the lower flange (4), a lower recess (8), L-shaped, and also at an immediately lower level to that of the upper flange (6) an upper recess (9) is made, L-shaped, in the opposite direction to the previous one, intended to house some extensions (10) of a protective bar (11) which is coupled collaterally to the bar (1) and which hides on its interior accessory elements of the collector, such as connection pipes (12), and also on the upper recess (9) a covering bar (13) can be coupled which is generally U-shaped with its ends (14) angled outwardly at 90° which are inserted in the upper recess (9) of bars (1) belonging to different collectors to cover the space separating collectors, obtaining an assembly which is compact and integrated in its installation.

2. Low temperature thermal solar collector according to claim 1 **characterised in that** the protective bar (11) is of a rectangular general configuration, one of the sides of which is open after the outward angle of the extensions (10), having on the side parallel to this and at the same height as said extensions (10) an upper recess (9') and a lower recess (8') intended to facilitate the coupling of another bar.

3. Low temperature thermal solar collector according to claim 1 **characterised in that** the bar (1) of the frame incorporates in its base a drilled hole (15) made for a screw (16) to pass which is secured by means of a nut (17) internal and a nut (18) external to said base, the external nut (18) being separate with respect to the head of the screw (20) defining a space which facilitates the guided displacement of the bar (1) in a sliding manner, with respect to some horizontal internal extensions (24) of a guide bar (21) up to its final securing, which guide bar (21) is fastened to a base bar (22) which constitutes an adjusting and positioning element of the collector with respect to the roof.

4. Low temperature thermal solar collector according to claim 1 **characterised in that** the guide bar (21) has a general U-shaped configuration from the ends of which run the aforesaid extensions (24) angled inwardly, holes having been drilled in the flanges of the guide bar (21) for the passage of a screw (23) arranged transversally which attaches the guide bar (21) to the base bar (22).
